# EUROPEAN PATENT APPLICATION

(11) **EP 2 084 975 A1**
(43) Date of publication of application: **05.08.2009**
(21) Application number: 08000389.0
(22) Date of filing: 10.01.2008
(51) Int. Cl.: A23L 1/318

(54) **Method for tenderising meat**

(71) Applicant: Linde Aktiengesellschaft, 80807 München (DE)
(72) Inventor: Hamrefors, Jan, 18751 Täby (SE); Marcusson, Anders, 18134 Lidingö (SE)
(74) Representative: Gellner, Bernd

(57) **Abstract**

The present invention relates to a process for tenderising meat, characterised in that, the meat is put into a pressure-resistant container and pressurised carbon dioxide is used for penetrating the meat in order to achieve a tenderising effect, whereby carbon dioxide is pressurised to a pressure exceeding ambient pressure, brought into contact with and penetrating into the meat and, after a period of letting take effect, the container is depressurised causing the carbon dioxide to leave the meat, at least partly.

## Description

The present invention relates to a process for tenderising meat.

Tenderising of meat is known to be done according to the normal decaying process by hanging meat at room temperature for a certain time. It is also known to use chemicals as tenderiser which create an acidic (pH < 7) environment to which the meat is exposed, and it is also known to use enzymes for enhancing the tenderising process.

The first method takes a long time and the result is often not satisfying in view of the evenness of the tenderisation - some parts may be overdone and some may be not affected.

By using an acidic environment and/or enzymes the efficiency of the tenderising process can be increased, however, this may result in a slightly sour taste of the meat, which is not favoured.

Therefore, it is an objective of the present invention to provide an improved meat tenderising process.

In accordance with the present invention, this objective is solved by a process for tenderising meat, characterised in that, the meat is put into a pressure-resistant container and pressurised carbon dioxide is used for penetrating the meat in order to achieve a tenderising effect, whereby carbon dioxide is pressurised to a pressure at least exceeding ambient pressure, brought into contact with and penetrating into the meat and, after a period of letting take effect, the container is depressurised causing the carbon dioxide to leave the meat, at least partly.

According to an embodiment of the present invention, dense phase, liquid and/or supercritical carbon dioxide is used.

Carbon dioxide and especially dense phase, liquid and supercritical carbon dioxide have properties that can be used for penetrating porous material such as rubber, textiles or wood. Due to its low viscositiy and low surface tension, the CO₂ is able to penetrate deep into the material. When removing the CO₂ from the meat and the container, the CO₂ inside the meat, which is present there mainly as liquid, gaseous or supercritical carbon dioxide depending on the pressure, the CO₂ expands during the depressurisation. Depending on the extent and rapidness of the pressure drop, some of the CO₂ will convert into dense phase carbon dioxide (dry ice) when passing the sublimation point. The sublimation point is at approximately 5 bar. Without wishing to be bound by scientific rationalisations, it is likely that the increase in volume by the built-up of a greater gaseous part during depressurisation causes tension in and/or expansion of the meat, which both increase the tenderising effect.

According to an embodiment of the present invention, dense phase carbon dioxide is used. The tenderising of meat with dense phase CO₂ is operated by intently using and increasing the built-up of dense phase CO₂ by expanding the CO₂ during depressurisation. Therefore, the CO₂ present in the meat after penetrating the meat is used to create this effect. A further objective of this embodiment is to lower the pH inside the meat by the presence of dense phase CO₂. This is very favourable because lowering of the pH increases the tenderising effect.

According to a preferred embodiment, following the meat treatment, the carbon dioxide pressure is released within a period of 10 minutes or shorter, more preferably within 5 minutes or shorter, and most preferably within 3 minutes or shorter. A shorter depressurizing period, such as 6 minutes or such as 4 minutes, leads to a significantly higher volume of the meat pieces after treatment. Accordingly, the force needed to cut the meat is lower for pieces which were decompressed quickly.

According to an embodiment of the present invention, the carbon dioxide is enriched with chemical substances being useful to improve the tenderising process, e.g. chemicals able to create an acid environment and/or enzymes. By adding chemical substances into the CO₂ the chemical substances can be transported into the meat fast. The chemical substances will stay in the meat after depressurisation and removing of the CO₂ when substances non-soluble or only partly soluble in CO₂ are used.

For using enzymes, the examples of using enzymes from papaya and/or kiwi fruit are given. The CO₂ is able to increase the mass transfer of additives, like enzymes or spices, into the meat. The use of enzymes is favourably enhanced by using extensive build-up of dense phase CO₂ as described above.

According to an embodiment of the present invention the carbon dioxide is enriched with spices, e.g. salt, vinegar and/or herbs.

According to an embodiment of the present invention, the carbon dioxide is enriched with marinades, e.g. sweet-sour marinade. For the use of marinades, the same principles apply as on using marinades before cooking as known, but the penetration of the marinades into the meat is greatly enhanced by the present invention. The marinades are therefore added to the CO2, e.g. before bringing it into contact with the meat. The marinades are preferably added to liquid carbon dioxide and may contain oil.

Generally spoken, all additives can alternatively be fed to the container in a single line separated from the CO₂ supply or fed to the CO₂ supply, or to a CO₂ reservoir, before the CO₂ enters the container ("before" is to be understood as concerning the flowdirection of the CO₂).

According to an embodiment of the present invention, before contacting the meat and the carbon dioxide, the meat is treated with a so called vacuum step, whereby air is at least partially removed from the meat and the pressure-resistant container surrounding the meat. The removal of the air out of such a porous material like meat is able to enhance the penetration and impregnation of the meat with carbon dioxide afterwards. Therefore, also additives carried by the CO₂ such as spices, herbs, oils, enyzmes penetrate the meat more easily after removing the air, i.e. by using a vacuum.

The present invention is very advantageous in view of many aspects, a few of them given below:

The inventive process achieves in a very advantageous way an improvement and acceleration of the tenderising process. By using CO2, especially as liquid and/or supercritical carbon dioxide, as a vehicle that penetrates the meat, together with or without additives, the tenderising process can be accelerated, can be, made more effective and more homogeneous, as to mention just a few advantages. The qualitiy of tenderisation is generally spoken significantly improved.

It has to be stressed that there is a very broad variety of combining different additives from a wide range of combinations or single substances being used together with CO₂ in order to solve the object of the present invention.

The present invention achieves a further siginificant improvement when expanding CO₂ during depressurisation in such a way that dense phase carbon dioxide (dry ice) is formed in the meat causing the meat to expand, too. By further depressurisation and/or elevation of temperature the dry ice transforms into gaseous CO₂ and the meat relaxes when the gaseous CO₂ leaves the meat, which leads to a further improvement of the tenderising effect.

It is a further advantage that spices and other additives can very easily penetrate the meat by introducing them together with the carbon dioxide.

The following examples shall illustrate the invention, but it shall be understood that these examples are not meant to restrict the scope of the invention.

### Examples 1-3:

Beef of poor quality was obtained from a restaurant kitchen and sliced into four pieces of dimensions 5 cm thickness and 10 cm diameter. Piece nr 1 was put into a pressure vessel, CO₂ pressure was built up within 5 minutes. The meat was kept at a pressure of 40 bar for 2 hours, and the pressure was released from the reactor within 10 minutes. Piece nr 2 was sprayed with a 50/50 mixture of oil and vinegar, and treated in the same way as piece nr. 1. Piece nr 3 was treated like piece nr 2, but the mixture contained 30% kiwi juice which naturally contains the enzyme actinidin which is able to break peptide bonds. Piece nr 4 was used as reference.

Said four pieces were prepared by a restaurant chief according to normal procedures and tested by a panel not knowing the differences in pre-treatment. As result, piece nr 4 without any treatment was considered very poor. Piece nr 1 was considered clearly better and noticeably more tender. Piece nr 2 was considered quite tender and the taste was considered homogeneously distributed within the meat. Piece nr 4 was clearly considered best. The increase of tenderness was equivalent to the difference between an entrecote or fillet and very hard, low-quality beef.

### Example 4:

A series of experiments was performed to study the effect of the duration of the depressurizing stage. It was found that a shorter depressurizing period, such as 6 minutes or such as 4 minutes, lead to a significantly higher volume of the meat pieces after treatment. Accordingly, the force needed to cut the meat was lower for pieces which were decompressed quickly.

## Claims

1. Process for tenderising meat, **characterised in that**, the meat is put into a pressure-resistant container and pressurised carbon dioxide is used for penetrating the meat in order to achieve a tenderising effect, whereby carbon dioxide is pressurised to a pressure exceeding ambient pressure, brought into contact with and penetrating into the meat and, after a period of letting take effect, the container is depressurised causing the carbon dioxide to leave the meat, at least partly.

2. Process according to claim 1, **characterised in that,** dense phase, liquid and/or supercritical carbon dioxide is used.

3. Process according to claim 1 or 2, **characterised in that**, following the meat treatment, the carbon dioxide pressure is released within a period of 10 minutes or shorter, more preferably within 5 minutes or shorter, and most preferably within 3 minutes or shorter.

4. Process according to any of claims 1 to 3, **characterised in that**, the carbon dioxide is enriched with chemical substances being useful to improve the tenderising process, e.g. chemicals able to create an acid environment and/or enzymes.

5. Process according to any of claims 1 to 4, **characterised in that**, the carbon dioxide is enriched with spices, e.g. salt, vinegar and/or herbs.

6. Process according to any of claims 1 to 5, **characterised in that**, the carbon dioxide is enriched with marinades, e.g. sweet-sour marinade.

7. Process according to any of claims 1 to 6, **characterised in that**, before contacting the meat and the carbon dioxide, the meat is treated with a vacuum step, whereby air is at least partially removed from the meat and the pressure-resistant container surrounding the meat.
